Europäisches Patentamt

European Patent Office

Office européen des brevets

(19)

(11) Publication number: **0 163 436**
A2

(12) **EUROPEAN PATENT APPLICATION**

(21) Application number: **85303153.2**

(22) Date of filing: **03.05.85**

(51) Int. Cl.⁴: **H 04 N 7/173**

(30) Priority: **31.05.84 US 616384**

(43) Date of publication of application:
**04.12.85 Bulletin 85/49**

(84) Designated Contracting States:
**AT BE CH DE FR GB IT LI LU NL SE**

(71) Applicant: AMERICAN TELEVISION &
COMMUNICATIONS CORPORATION
160 Inverness DRive West
Englewood Colorado 80112(US)

(72) Inventor: Campbell III, Wallace S.
6948 West Nova Drive
Littleton Colorado 80123(US)

(74) Representative: Hartley, David
c/o Withers & Rogers 4 Dyer's Buildings Holborn
London, EC1N 2JT(GB)

(54) **Power supply system for CATV tap-off unit.**

(57) In a cable TV system of the type having external control units located remotely from a head end, each external control unit containing tuner/converters and other electronic circuitry for distributing cable TV signals to a plurality of subscriber houses, a stabilized power supply circuit is arranged in each external control unit. A source of AC power is supplied to the stabilized power supply circuit from each subscriber connected to the external control unit through a cable TV drop cable, thereby reducing the amount of power required to be supplied by the system operator and transmitted via the cable and ensuring that each subscriber equitably shares in supplying power to the external control unit.

ATC 1001

## POWER SUPPLY SYSTEM FOR CATV
## TAP-OFF UNIT

### Background of the Invention

This invention relates to a power supply device for use in a cable television ("CATV") system.

The transmission line in a typical CATV system includes a trunk line extending from a head end, one or more feeder lines branched from the trunk line, and drop cables branched from the feeder lines to subscriber premises. The CATV signal is a very high-frequency signal which is transmitted from the head end via the transmission line. Subscribers contract with the CATV service company for desired channels and can view only those channels.

In a conventional CATV system, when a subscriber contracts with the CATV service company to subscribe to receive desired television channels, the company installs a CATV converter indoors in the subscriber's house. The CATV converter is powered by being plugged into an ordinary AC outlet in the subscriber's home. The CATV converter allows reception by the subscriber of only those television signals for which the subscriber has contracted.

Placing the CATV converter indoors within the reach and control of the subscriber creates at least two security problems. First, the subscriber may be able to modify the CATV converter to view
CATV programs on nonsubscribed channels, resulting
in a loss of revenue to the CATV system operator.
Second, the subscriber may move and take the expensive leased CATV converter with him, although the
CATV service company is entitled to repossess the
converter. Again, the CATV service company suffers
a loss.

To prevent the misappropriation of CATV
services and of CATV converters, the CATV converter
may be placed outside of the subscriber's house, for
example in an external control unit mounted on a
telephone pole. However, once the converter unit is
installed outside of the subscriber's home, another
means must be provided for powering the converter.

The present invention has been made in
consideration of the above situation, and has for
its object to provide a power supply device for a
CATV system in which the CATV converters and other
electronic circuitry required for transmitting CATV
signals to subscribers are installed outside of the
subscriber's home.

It is another object of the present invention to provide a power supply device for a CATV
system having external control units which are installed outside the subscribers' premises, wherein
power for each external control unit is supplied by
the subscribers served by that external control unit,
thereby decreasing the power which must be provided
by the system operator and transmitted over the CATV
cables.

It is a further object of the present invention to provide a power supply device for a CATV system having external control units which are installed
outside the subscribers' premises, wherein the power
requirements for powering each external control unit are equitably shared by the subscribers to which the
external control unit provides TV signals.

It is yet another object of the invention
to provide power from subscribers to an outdoor
external control unit via the CATV signal drop cables
connecting the subscribers to the external control
unit in such a way that problems of corrosion at
drop cable terminal connections are minimized.

## Summary of the Invention

- According to the present invention, a stabi-
lized power supply circuit is arranged in each external control unit in a CATV system, and an AC voltage
is applied to the stabilized power supply circuit via
the drop cables extending from the external control
unit to the premises of the subscribers served by
that external control unit. Each subscriber contributes a portion of the power required by the associated external control unit. As a result, the subscribers equitably share in the power requirements
of the external control units, and less power need
be supplied by the system operator through the CATV
transmission lines, thereby ensuring stable operation of the external control unit.

## Brief Description of the Drawings

Fig. 1 shows a portion of a CATV system
having an external control unit for serving a plurality of subscribers, the external control unit
being powered in accordance with the present invention;

Fig. 2 is a graph showing the spectral
characterisitics of the signals of the CATV system
shown in Fig. 1;

Fig. 3 is an overall block diagram illustrating a power supply device according to an embodiment of the present invention;

Fig. 4 is a circuit diagram of a first embodiment of the power supply device shown in Fig. 3;

Fig. 5 is a circuit diagram of a second embodiment of the power supply device shown in Fig. 3; and

Fig. 6 is a circuit diagram of a third embodiment of the power supply device shown in Fig. 3.

## Detailed Description of the Preferred Embodiments

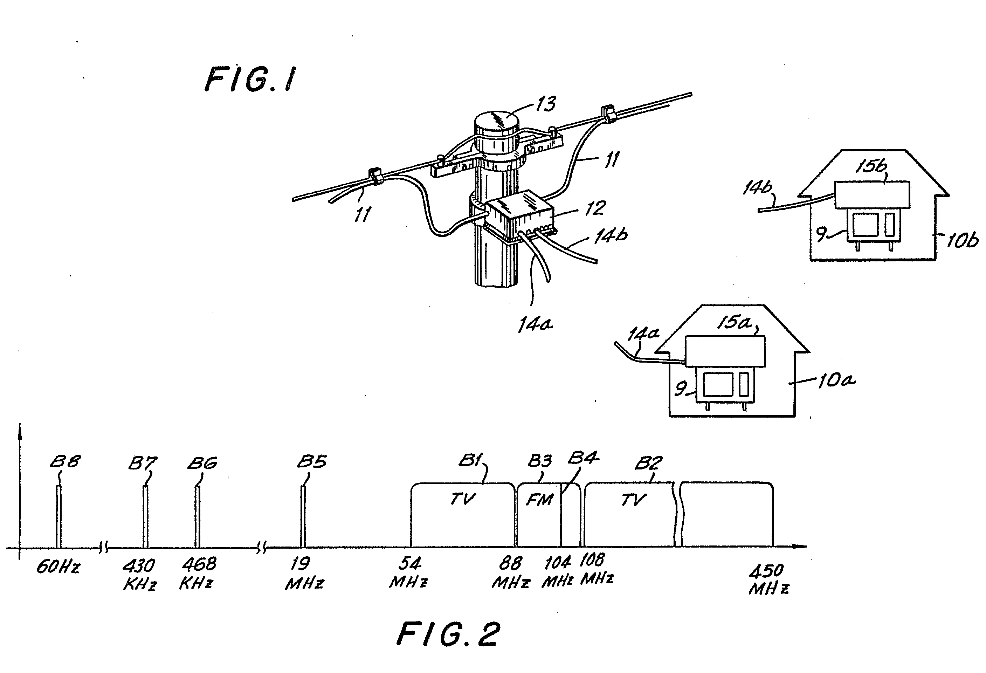

Referring to Fig. 1, reference numeral 11 denotes a feeder cable carrying CATV signals transmitted from a head end (not shown) to an external control unit 12 mounted adjacent to or on a utility or telephone pole 13. External control unit 12 is one of a plurality of external control units mounted along feeder line 11. Each of a plurality of drop cables 14a, 14b, etc. is connected from external control unit 12 to a respective one of a plurality of subscribers' premises 10a, 10b, etc. Subscriber processing units 15a, 15b, etc. are installed indoors in the subscribers' houses. Each subscriber processing unit 15 is plugged into an ordinary commercial power outlet in the subscriber's house. Each subscriber processing unit 15 is utilized by the subscriber to select a TV channel for viewing on his or her television receiver 9. In addition, each subscriber processing unit 15 applies power to its associated drop cable 14 for powering external control unit 12 as described in detail below. Only two subscriber houses and their associated drop cables are illustrated as connected to and powering external control unit 12 in Fig. 1, but in fact additional drop cables can be connected from external control unit 12 to other subscriber houses. In one embodiment, a total of six drop cables can be provided to connect six subscribers to external control
unit 12.

Fig. 2 shows a typical frequency spectrum
employed in the CATV system of Fig. 1. A low band B1
of television signals falls within the range between
54 MHz and 88 MHz, and a high band B2 of television
signals falls within the range between 108 MHz and
450 MHz. Typically, the television signals on as
many as 66 channels are transmitted within the ranges
of bands B1 and B2. An FM audio band B3 of 88 MHz
to 108 MHz is used for transmitting FM audio signals.
Band B4 at approximately 104 MHz is used for transmitting so-called forward data from the head end to
external control units 12. This forward data is
used to control external control units 12. Band B5
at approximately 19 MHz is used for transmitting
so-called reverse data from external control
units 12 to the head end. This reverse data may be
used for such purposes as allowing external control
units 12 to report their status to the head end.
Band B6 at approximately 468 KHz is used for transmitting data (e.g., channel selection request data)
from each subscriber processing unit 15 to the associated external control unit 12 via the intervening
drop cable 14. Band B7 at approximately 430 KHz is
used for transmitting data (e.g., channel selection
confirmation data) from external control unit 12 to
the associated subscriber processing units 15 via
the intervening drop cables. Finally, band B8 at
approximately 60 Hz is used for transmitting an AC
power signal from each subscriber processing unit 15
to the associated external control unit 12 via the
intervening drop cable 14. Of course, other bands
(not shown) may be used to transmit other signals.

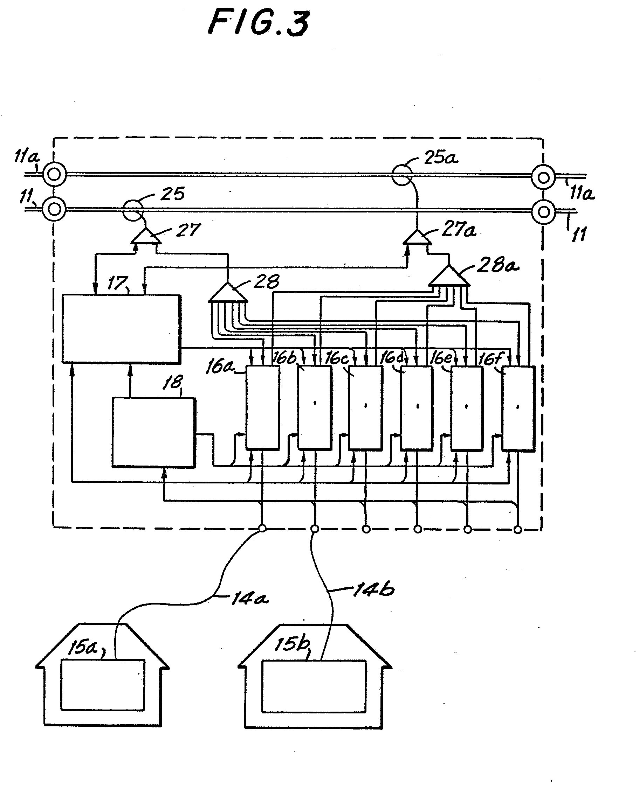

Fig. 3 shows the internal structure of
external control unit 12. Six subscriber units 16a, 16b, 16c, 16d, 16e, and 16f, one for each of six subscribers, are arranged in the external control unit. Television signals from feeder cable 11 are supplied to subscriber units 16a through 16f via directional coupler 25, two-way distributor 27, and six-way distributor 28. FM audio signals are supplied to subscriber units 16a through 16f via coupler 25, two-way distributor 27, and common control circuit 17. In addition to feeder cable 11, a second feeder cable 11a can be provided as shown in Fig. 3 to double the number of TV channels available on the CATV system. Feeder cable 11a is connected to subscriber units 16a through 16f via directional coupler 25a and distributors 27a and 28a.

Each of subscriber units 16a through 16f includes a converter/tuner for selecting a desired TV channel from the plurality of TV channels present on feeder cables 11 and 11a. When a subscriber depresses a key on his or her subscriber processing unit 15, the subscriber processing unit applies a 468 KHz request signal to common control circuit 17 in external control unit 12 via the subscriber's drop cable 14 and the corresponding subscriber unit 16. Common control circuit 17 has a memory for storing individual subscriber data such as data identifying the channels for which each associated subscriber has contracted. The individual subscriber data is transmitted from the head end of the CATV system using forward data transmission band B4.

When the request signal from the subscriber is supplied to common control circuit 17, the common control circuit detects whether or not the requested channel is a subscribed channel. If the subscriber has subscribed to the requested channel, common control circuit 17 supplies channel selection data to the converter/tuner contained within the corresponding subscriber unit 16. If the subscriber has not subscribed to the requested channel, common control
circuit 17 disables the tuning operation of the converter/tuner to prevent the subscriber from viewing
the requested TV channel.

The converter/tuner of each subscriber
unit 16a through 16f includes a frequency synthesizer
for selecting a particular TV channel from among the
plurality of TV channels transmitted on feeder cables
11 and 11a, and for converting the selected cable
channel to a particular channel (e.g., channel 3)
for transmission to the subscriber's TV set via the
associated drop cable.

Although not necessary for an understanding
of the present invention, additional background information regarding the CATV system shown in Figures 1-3
will be found in commonly assigned U.S. patent application Serial No. 616,412, Filed May 31, 1984 and
entitled "Cable Television System".

In the above-described system, and in accordance with the present invention, the subscribers
connected to external control unit 12 supply the
power required to operate the external control unit
via drop cables 14a-14f. Each subscriber processing
unit 15, when supplied with power from the subscriber's
house (e.g., from a conventional AC power outlet),
applies an AC voltage to stabilized power supply
unit 18 in external control unit 12 through the associated drop cable 14. Power supply unit 18 converts
the applied AC power to regulated and stabilized DC
power for powering the electronic circuits of external control unit 12. Thus, DC power outputs from
power supply unit 18 are supplied to common control
circuit 17, subscriber units 16a through 16f, and so
on.

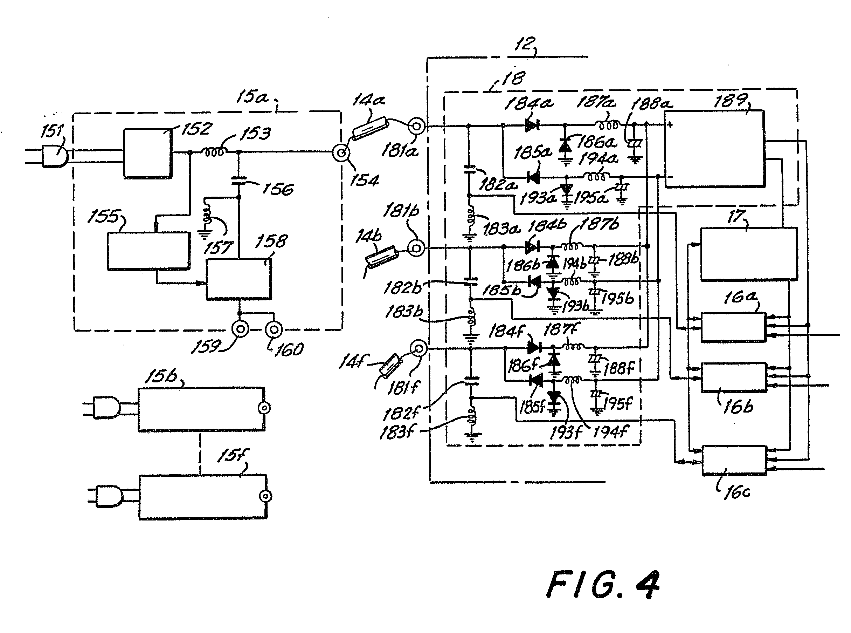

Fig. 4 shows a circuit diagram of a first embodiment of the power supply system of this invention.

As shown in Fig. 4, drop cable 14a connects subscriber processing unit 15a to terminal 181a of external control unit 12. Terminal 181a is connected to ground by a series circuit comprising capacitor 182a and coil 183a. Circuit elements 182a and 183a transmit high frequency television, FM audio, and data signals between drop cable 14a and associated subscriber unit 16a, while preventing lower frequency AC power signals received via drop cable 14a from being applied to subscriber unit 16a.

Terminal 181a is also connected to rectifying diodes 184a and 185a. Diodes 184a and 185a serve to half-wave rectify the AC power signals received via drop cable 14a to produce positive and negative voltages at the cathode of diode 184a and the anode of diode 185a, respectively. Diode 184a is also connected to a first filter circuit comprising coil 187a, capacitor 188a, and diode 186a. Similarly, diode 185a is connected to a second filter circuit comprising coil 194a, capacitor 195a and diode 193a. The outputs of the first and second filter circuits are respectively applied to the positive ("+") and negative ("-") inputs of stabilized power source circuit 189.

The above-described circuit operates as follows. AC power signals supplied by a subscriber via drop cable 14a and terminal 181a are rectified by diodes 184a and 185a. Positive half-cycles are rectified by diode 184a to produce a positive DC power signal with respect to ground, and negative half-cycles are rectified by diode 185a to produce a negative DC power signal with respect to ground.

These positive and negative DC voltages are transmitted through coils 187a and 194a, respectively.
Coils 187a and 194a present a low impedence to DC
and low frequency AC power signals, and present a
high impedence to the high frequency television, FM
audio, and data signals to prevent these high
frequency signals from entering stabilized power
source circuit 189. Diodes 186a and 193a discharge
the energy stored in coils 187a and 194a. Capacitors 188a and 195a serve to remove ripple from and
to smooth the DC power signals entering power source
circuit 189. Regulated and stabilized DC power
supply voltage is applied from stabilized power
source circuit 189 to common control circuit 17 and
to subscriber units 16a to 16f.

The AC power signals received via drop
cable 14a are supplied by subscriber processing
unit 15a. In subscriber processing unit 15a, reference numeral 151 denotes a conventional AC power
plug for plugging into a commercial AC power outlet
in the subscriber's house. AC voltage is supplied
via plug 151 to conventional step-down transformer
152. The AC voltage output from transformer 152 is
applied to coil 153 having a low impedance to AC
power signals and a high impedance to high frequency
television, FM audio, and data signals. Coil 153 is
in turn connected to terminal 154, to which is connected drop cable 14a. AC power signals from transformer 152 thus are applied to drop cable 14a for
transmission to external control unit power supply
18. The output from transformer 152 is also applied
to stabilized power source circuit 155 contained
within subscriber processing unit 15a. The output
from stabilized power source circuit 155 is supplied
to signal processing device 158. Signal processing
device 158 receives television, FM audio, and data signals via drop cable 14a and applies the television and FM signals to terminals 159 and 160. The television, FM audio, and data signals are provided to signal processing device 158 via coupling capacitor 156 connected in series between signal processing device 158 and terminal 154. Coupling capacitor 156 presents a low impedance to these high frequency signals, and a high impedance to AC power signals from transformer 152. Coil 157 is connected to ground and to capacitor 156 and signal processing device 158 to further prevent AC power signals from entering signal processing device 158. Coil 157 has a high impedance against high frequency television, FM audio, and data signals, and a low impedence to the low frequency AC power signals.

In the above description, a power supply has been described with respect to a single subscriber having a subscriber processing unit 15a connected to external control unit 12 and subscriber unit 16a via drop cable 14a. In practice, however, external control unit 12 can also supply CATV signals to a plurality of other subscribers having subscriber processing units 15b through 15f connected to external control unit 12 via drop cables 14b through 14f. In such a case, each subscriber processing unit 15b through 15f (corresponding to associated subscriber units 16b through 16f in external control unit 12) has identical power supply circuitry as described with respect to subscriber processing unit 15a to supply AC power signals to external control unit terminals 181b through 181f via drop cables 14b through 14f. Each terminal 181b through 181f is connected to an associated rectifying and smoothing circuit in external control unit 12 comprising circuit elements 184b-188b and 193b-195b through 184f-188f and 193f-195f, respectively. The outputs of each rectifying and smoothing circuit are connected to the inputs of power source circuit 189
such that the power obtained from the several subscriber processing units 15a through 15f is combined.
In this manner, each subscriber equitably contributes
a share of the total power required to operate
external control unit 12.

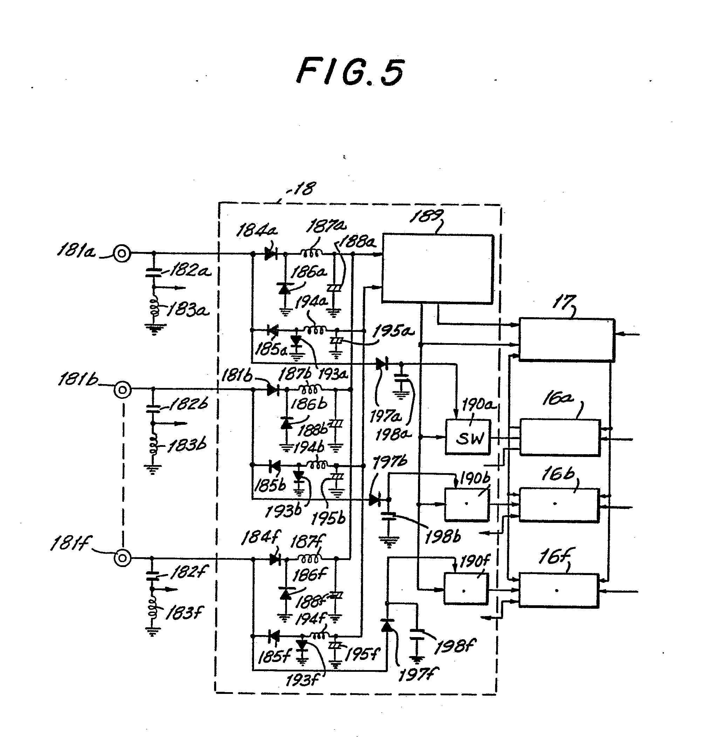

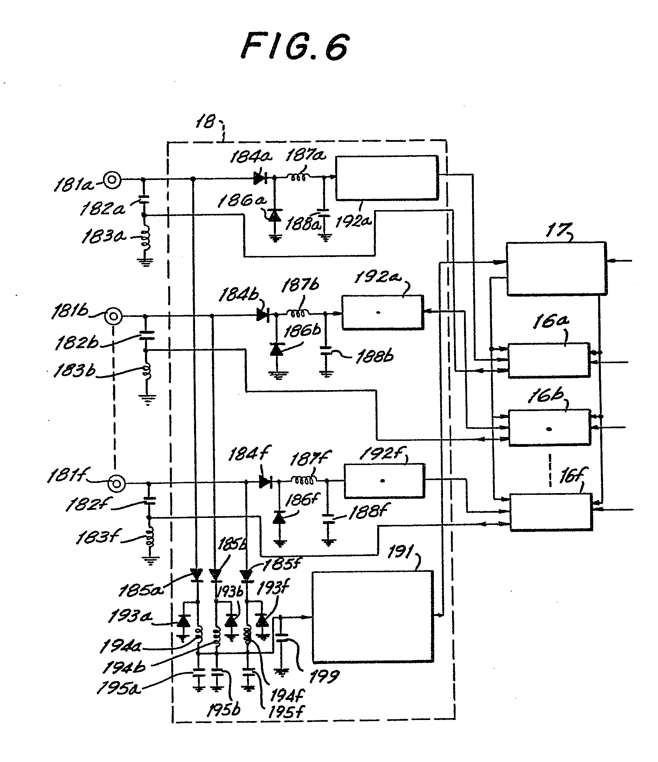

Figs. 5 and 6 show power supplies according
to other embodiments of the present invention.  The
same reference numerals used in Fig. 4 denote the
same components in the embodiments shown in Figs. 5
and 6. ‾Accordingly, a detailed description of those
common components will be omitted.

Fig. 5 shows a power supply in accordance
with an embodiment of the invention in which the·
failure of a subscriber to provide AC power signals·
via his or her drop cable 14a through 14f results in
turning off the subscriber unit 16a through 16f associated with that subscriber.  Thus, the embodiment
of Fig. 5 requires each subscriber to supply an
equitable share of the power required to operate
external control unit 12 as a prerequisite·to
receiving television signals from the external
control unit.

The circuitry and operation of the power
supply of Fig. 5 will now be described with respect
to a first subscriber supplying AC power via terminal
181a.  It will be understood that the remaining circuitry of Fig. 5 associated with other subscribers
and terminals 181b through 181f is the same and operates in an identical manner.

As described above, AC power signals are
provided from a subscriber via drop cable 14a (not
shown in Fig. 5) to terminal 181a.  The anode of
diode 197a is connected to terminal 181a to tap off
and half-wave rectify a portion of the AC power
signal supplied by the subscriber and appearing at
terminal 181a.  Connected to the cathode of diode 197a is capacitor 198a. The other terminal of capacitor 198a is connected to ground. Capacitor 198a serves to smooth the half-wave rectified DC power signals appearing at the cathode of diode 197a to produce a DC control signal. This DC control signal is applied to the ON/OFF terminal of switch 190a which is connected in series between the power input of subscriber unit 16a and the power output of stabilized power source circuit 189. Switch 190a may be any conventional switching device, such as a relay or a switching transistor.

In operation, as long as AC power is supplied by the subscriber and is received at terminal 181a, switch 190a will be maintained in an ON condition by the presence of the DC control signal at the ON/OFF terminal of the switch. With switch 190a in the ON condition, subscriber unit 16a will receive power through switch 190a from stabilized power source circuit 189 and operate to supply television signals to the subscriber via the drop cable 14a. However, if power is not received at terminal 181a (e.g., the subscriber associated with terminal 181a removes plug 151 (Fig. 4) from the source of commercial AC power), switch 190a will be switched to an OFF state and interrupt the flow of DC power to subscriber unit 16a from stabilized power supply 189. In this event, subscriber unit 16a will cease to supply television signals to the subscriber. Thus, the circuit comprised of diode 197a, capacitor 198a, and switch 190a ensures that the subscriber provides an equitable share of the power required to operate external control unit 12 as a prerequisite to receiving television signals. In an identical way, the circuits 197b, 198b, and 190b through 197f, 198f, and 190f ensure that the other subscribers respectively connected via drop cables 14b through 14f to terminals 181b through 181f provide an equitable

share of the power required to operate the circuits of external control unit 12.

Fig. 6 shows another embodiment of the invention which ensures that each subscriber desiring to view CATV television signals provides an equitable share of the power to operate external control unit 12.

As shown in Fig. 6, individual subscriber stabilized power supply circuits 192a through 192f are arranged so as to correspond to subscriber units 16a through 16f, respectively. Each stabilized power supply circuit 192a through 192f independently stabilizes the AC power received from subscribers at terminals 181a through 181f, respectively. The outputs of stabilized power supply circuits 192a through 192f are then applied to subscriber units 16a through 16f, respectively. Because each subscriber unit 16a through 16f in the embodiment of Fig. 6 receives power only from its associated subscriber, each unit 16a through 16f will operate to supply television signals to the associated subscriber only as long as that subscriber provides AC power via the subscriber's drop cable. This ensures that each subscriber supplies a share of the power required to operate external control unit 12.

Also shown in Fig. 6 is a common stabilized power source circuit 191 for providing stabilized power to common control circuit 17. Each subscriber supplies an equitable share of the power utilized by common control circuit 17. This is accomplished, as shown in Fig. 6, by connecting the cathodes of diodes 185a through 185f to terminals 181a through 181f, respectively. Diodes 185a through 185f rectify subscriber-supplied AC power signals appearing at terminals 181a through 181f, respectively, to produce half-wave rectified DC voltages.

Connected to the anode of diodes 185a through 185f are the anodes of diodes 193a through 193f, respectively, and one end of each of coils 194a through 194f. The other ends of coils 194a through 194f are connected (1) to each other to sum the power supplied by the several subscribers, (2) to capacitors 195a through 195f and 199, and (3) to the input of common power source 191. Coils 194a through 194f present a low impedance to the DC power signals and a high impedance to television, FM audio, and data signals. Diodes 193a through 193f connected to coils 194a through 194f, respectively, serve to discharge the energy stored in the coils as already described with reference to the embodiment shown in Fig. 4. Capacitors 195a through 195f and capacitor 199 serve to smooth the combined rectified power signals applied to common power source circuit 191.

While preferred embodiments of the invention have been set forth for purposes of the disclosure, modification to the disclosed embodiments may occur to those skilled in the art. Accordingly, the appended claims are intended to cover all embodiments of the invention and modification to the disclosed embodiments which do not depart from the spirit and scope of the invention.

What is Claimed is:

1.  In a cable TV system having a head
end and a plurality of external control units located
remotely from the head end, each external control
unit having electronic circuitry including a
plurality of independent electronic circuits each
associated with a different one of a plurality of
subscribers for selecting and transmitting cable TV
and other signals to subscribers via drop cables
connected to signal outputs of the electronic circuits, and further including one or more electronic
circuits which are common to the plurality of subscribers, a power supply device for powering the
electronic circuitry of the external control unit,
comprising:

a plurality of sources of AC power
for providing power to the external control unit,
each of said sources of AC power being associated
with and provided by a different one of the
subscribers;

means for applying each of said
sources of AC power to the drop cable associated
with the subscriber providing said source of AC
power;

means located in the external control
unit and connected to the drop cables for rectifying
and combining said sources of AC power so that each
subscriber provides a share of the total power
required by the electronic circuitry of the external
control unit; and

means located in the external control
unit and connected to said rectifying and combining
means for providing stabilized DC power to the electronic circuitry of the external control unit.

2. The power supply device of claim 1, further including means located in the external control unit and connected to said drop cables for separating the TV and data signals from said sources of AC power to prevent AC power from entering the signal outputs of the independent electronic circuits.

3. The power supply device of claim 2, wherein said separating means comprises a series combination of a capacitor and an inductor.

4. In a cable television system having a head end and a plurality of external control units located remotely from the head end, each external control unit having electronic circuitry including a plurality of independent electronic circuits each associated with a different one of a plurality of subscribers for transmitting selected cable TV signals to subscribers via drop cables connected to signal outputs of the independent electronic circuits, and further including one or more electronic circuits which are common to the plurality of subscribers, a power supply device for powering the electronic circuitry of the external control unit, comprising:

a plurality of sources of electrical power for providing power to the electronic circuitry of the external control unit, each of said sources of power being associated with and provided by a different one of the subscribers;

means for applying each of said sources of power to the drop cable associated with the subscriber providing said source of power;

means associated with the external control unit, and connected to said drop cables and to the electronic circuitry of the external control unit, for combining said sources of power so that each subscriber provides a share of the total power required by the electronic circuitry of the external control unit; and

sensing means associated with the external control unit and connected to said drop cables and to the independent electronic circuits, said sensing means being responsive to the absence of power from a subscriber to inhibit the transmission of cable TV signals to that subscriber from the independent electronic circuit associated with that subscriber.

5. The power supply device of claim 4, wherein said plurality of sources of electrical power comprise sources of AC power.

6. The power supply device of claim 4, wherein said sensing means includes switch means for interrupting the flow of power to the independent electronic circuit associated with that subscriber.

7. The power supply device of claim 5, wherein said sensing means includes switch means for interrupting the flow of power to the independent electronic circuit associated with that subscriber.

8. The power supply device of claim 5, further including means associated with the external control unit and connected to said drop cables for separating said AC power from the cable TV signal outputs of the independent electronic circuits.

9. The power supply device of claim 4, wherein said combining means further includes means for preventing power associated with and provided by a subscriber from being transmitted to another subscriber via the drop cable associated with that other subscriber.

FIG.1

FIG.2

# FIG.3

FIG. 4

FIG.5

FIG.6